# EUROPÄISCHE PATENTSCHRIFT

(11) **EP 2 625 059 B1**
(45) Veröffentlichungstag und Bekanntmachung des Hinweises auf die Patenterteilung: **19.04.2017**
(21) Anmeldenummer: 11749167.0
(22) Anmeldetag: 26.08.2011
(51) Int. Cl.: B60L 7/10, B60L 11/12, B60L 11/18, B60W 10/24, B60W 20/00, B60W 30/18, B60W 10/06, B60W 10/08, B60W 10/26, B60W 10/18, B60W 20/13, B60W 20/14, H02J 7/00

(54) **HYBRIDANTRIEBSEINRICHTUNG**
HYBRID DRIVE DEVICE
SYSTÈME DE PROPULSION HYBRIDE

(30) Priorität: 08.10.2010 DE 102010042183
(43) Veröffentlichungstag der Anmeldung: 14.08.2013
(73) Patentinhaber: Robert Bosch GmbH, 70442 Stuttgart (DE)
(72) Erfinder: KAEFER, Oliver, 71711 Murr (DE)
(86) Internationale Anmeldenummer: PCT/EP2011/064725
(87) Internationale Veröffentlichungsnummer: WO 2012/045522

(56) Entgegenhaltungen:
- EP-A2- 1 876 082
- WO-A1-2009/080901
- FR-A1- 2 851 516
- US-A- 5 786 640
- US-A1- 2005 189 894

## Beschreibung

Die vorliegende Erfindung betrifft ein Verfahren zum Betreiben einer Hybridantriebseinrichtung gemäß dem Oberbegriff des Anspruches 1 und eine Hybridantriebseinrichtung gemäß dem Oberbegriff des Anspruches 12.

### Stand der Technik

In zunehmenden Maße werden von der Kraftfahrzeugindustrie Kraftfahrzeuge entwickelt und/oder hergestellt, die mit einer Elektromaschine angetrieben werden. Dabei stammt die elektrische Energie für den Betrieb der Elektromaschine zum Antrieb des Elektrofahrzeuges aus einer in dem Elektrofahrzeug angeordneten Batterie. Die Batterie wird dabei während des Stillstandes des Elektrofahrzeuges an einem Stromnetz aufgeladen. Das Elektrofahrzeug umfasst hierzu ein Ladegerät. Die Kapazität zum Speichern von elektrischer Energie der Batterie ist dabei beschränkt, so dass von dem Elektrofahrzeug nur Reichweiten im Bereich von ungefähr 50 km bis 200 km erreicht werden können. Zur Vergrößerung der Reichweite des Elektrofahrzeuges ist dieses mit einem sogenannten Range Extender, einer Verbrennungsmotor-Generator-Einheit, versehen. Bei längeren Fahrstrecken mit dem Elektrofahrzeug, während denen die Batterie nicht oder nicht ausreichend von einem Stromnetz aufgeladen werden kann, wird mittels der Verbrennungsmotor-Generator-Einheit die Batterie aufgeladen und/oder mittels der Verbrennungsmotor-Generator-Einheit der Elektromaschine elektrischer Strom zugeführt. Dadurch kann die mögliche Reichweite eines derartigen Elektrofahrzeuges mit einem Range Extender vergrößert werden auf Reichweiten, die der von herkömmlichen Kraftfahrzeugen entspricht, die ausschließlich mit einem Verbrennungsmotor angetrieben werden.

Die Elektromaschine des Kraftfahrzeuges wird sowohl als Elektromotor als auch als Generator betrieben. Bei einem Betrieb als Elektromotor dient die Elektromaschine zum Antrieb des Kraftfahrzeuges und bei einem Betrieb der Elektromaschine als Generator im Rekuperationsbetrieb dient die Elektromaschine zur Verzögerung des Kraftfahrzeuges bzw. Hybridfahrzeuges. Ist während der Fahrt des Hybridfahrzeuges ein Betrieb der Verbrennungsmotor-Generator-Einheit erforderlich, wird mit der von der Verbrennungsmotor-Generator-Einheit zur Verfügung gestellten elektrischen Energie sowohl die Elektromaschine als Elektromotor betrieben als auch die Batterie aufgeladen. Während eines derartigen Betriebes kann es zu einer Verzögerung oder einem Abbremsvorgang an dem Hybridfahrzeug kommen. Während eines Verzögerungsvorganges des Hybridfahrzeuges wird die Elektromaschine vom Betrieb als Elektromotor in einen Betrieb als Generator umgeschaltet und erzeugt somit elektrische Energie zum Aufladen der Batterie. Dabei befindet sich jedoch auch noch die Verbrennungsmotor-Generator-Einheit in Betrieb, so dass sich die elektrische Ladeleistung der Batterie sowohl aus der elektrischen Leistung der Elektromaschine als Generator als auch aus der von der Verbrennungsmotor-Generator-Einheit zur Verfügung gestellten elektrischen Leistung zusammensetzt. Dies kann zu Überspannungen an der Ladespannung der Batterie führen oder zu einem hohen Ladestrom, was zu Schäden an den Hochvoltkomponenten des Hybridfahrzeuges, insbesondere an der Batterie, führen kann. Das gattungsbildende Dokument US 2005/189894 beschreibt ein Verfahren entsprechend dem Oberbegriff des Anspruchs 1. Die DE 10 2008 039 907 zeigt ein Fahrzeug mit einer Energiequelle, einem elektrischen Energiespeicher, einen zum Erzeugen von elektrischer Energie und zum Aufladen des elektrischen Energiespeicher ausgebildeten Generator, einem elektrischen Traktionsmotor und einer zum Einschalten und/oder zum Ausschalten der Energiequelle ausgebildeten Aktivierungsvorrichtung, wobei durch eine Startvorrichtung mit einem Steuerelement, das das Einschalten und/oder das Ausschalten der Energiequelle durch die Aktivierungsvorrichtung initiiert, wobei das Steuerelement derart ausgebildet ist, dass es die Initiierung ermöglicht, ohne dass sich der Fahrer zum Zeitpunkt der Initiierung im Fahrzeug befinden muss.

### Offenbarung der Erfindung

### Vorteile der Erfindung

Erfindungsgemäßes Verfahren zum Betreiben einer Hybridantriebseinrichtung, die Hybridantriebseinrichtung umfassend eine Verbrennungsmotor-Generator-Einheit als Range Extender, wenigstens eine Elektromaschine zum Antrieb und zur Verzögerung des Hybridfahrzeuges und eine Batterie mit den Schritten: Erzeugen von mechanischer Energie in einem Verbrennungsmotor, Umwandeln der mechanischen Energie in elektrische Energie in einem Generator der Verbrennungsmotor-Generator-Einheit, Laden der Batterie mit elektrischer Energie aus dem Generator der Verbrennungsmotor-Generator-Einheit und/oder Laden der Batterie mit elektrischer Energie aus der Elektromaschine im Rekuperationsbetrieb, wobei während des Betriebes der wenigstens einen Elektromaschine als Generator zur Verzögerung des Hybridfahrzeuges und einem Laden der Batterie mit elektrischer Energie aus der wenigstens einen Elektromaschine im Rekuperationsbetrieb die von dem Generator der Verbrennungsmotor-Generator-Einheit zur Verfügung gestellte elektrische Leistung und/oder die von der wenigstens einen Elektromaschine im Rekuperationsbetrieb zur Verfügung gestellte elektrische Leistung zum Laden der Batterie dahingehend gesteuert und/oder geregelt wird, dass die elektrische Ladeleistung der Batterie unterhalb eines vorgegebenen Grenzwertes liegt

Während eines Verzögerungs- oder Bremsvorganges des Hybridfahrzeuges wird die wenigstens eine Elektromaschine im Rekuperationsbetrieb betrieben und stellt als Generator elektrische Energie zum Aufladen der Batterie, insbesondere einer Hochvoltbatterie, zur Verfügung. Dabei wird während dieses Betriebes der wenigstens einen Elektromaschine im Rekuperationsbetrieb die von der wenigstens einen Elektromaschine zur Verfügung gestellte elektrische Leistung zum Aufladen der Batterie bei gleichzeitigem Betrieb der Verbrennungsmotor-Generator-Einheit zunächst auf einem niedrigen Wert gehalten oder abgeschaltet, so dass dadurch die Summe aus der von der wenigstens einen Elektromaschine und der Verbrennungsmotor-Generator-Einheit zur Verfügung gestellten elektrischen Leistung ein vorgegebener Grenzwert nicht überschreitet und damit keine Schäden an Hochvoltkomponenten der Hybridantriebseinrichtung, insbesondere der Batterie, auftreten.

Insbesondere wird die von dem Generator der Verbrennungsmotor-Generator-Einheit zur Verfügung gestellte elektrische Leistung gesteuert und/oder geregelt mit der Drehzahl des Verbrennungsmotors und/oder der Drehzahl des Generators der Verbrennungsmotor-Generator-Einheit und/oder der vorgegebene Grenzwert der elektrischen Ladeleistung der Batterie liegt zwischen dem 0,9 oder 2,5-Fachen, insbesondere zwischen dem 0,9 oder 1,5-Fachen der maximalen elektrischen Leistung der Verbrennungsmotor-Generator-Einheit und/oder der vorgegebenen Grenzwert hängt von Parametern, z. B. der Temperatur, von Komponenten, z. B. der Batterie, der Hybridantriebseinrichtung ab.

In einer weiteren Ausgestaltung wird die elektrische Ladeleistung der Batterie aus der Summe der von dem Generator der Verbrennungsmotor-Generator-Einheit und der Elektromaschine zur Verfügung gestellten elektrischen Leistung gebildet und vorzugsweise wird die erforderliche elektrische (Verbrauchs-) Leistung von Nebenaggregaten, z. B. einer Klimaanlage oder Heizung, berücksichtigt. Die Nebenaggregate verbrauchen eine elektrische Leistung, so dass dadurch die elektrische Ladeleistung der Batterie der Summe der von dem Generator der Verbrennungsmotor-Generator-Einheit und der Elektromaschine zur Verfügung gestellten elektrischen Leistung abzüglich der elektrischen (Verbrauchs-)Leistung von Nebenaggregaten entspricht.

In einer ergänzenden Ausführungsform wird die von dem Generator der Verbrennungsmotor-Generator-Einheit zur Verfügung gestellte elektrische Leistung in Abhängigkeit von dem Rekuperationsdrehmoment der Elektromaschine gesteuert und/oder geregelt und/oder umgekehrt. Mit Hilfe des Rekuperationsdrehmomentes wird das Hybridfahrzeug von der Elektromaschine im Rekuperationsbetrieb abgebremst bzw. verzögert und mit Hilfe des Rekuperationsdrehmomentes wird die Elektromaschine als Generator angetrieben und erzeugt elektrischen Strom. Das Rekuperationsdrehmoment ist somit direkt proportional zu der von der Elektromaschine zur Verfügung gestellten elektrischen Leistung.

Vorzugsweise wird die von dem Generator der Verbrennungsmotor-Generator-Einheit zur Verfügung gestellte elektrische Leistung indirekt proportional zu dem Rekuperationsdrehmoment der Elektromaschine gesteuert und/oder geregelt und/oder das Rekuperationsdrehmoment der Elektromaschine wird indirekt proportional zu dem von dem Generator der Verbrennungsmotor-Generator-Einheit zur Verfügung gestellte elektrische Leistung gesteuert und/oder geregelt.

In einer zusätzlichen Ausgestaltung ist die von dem Generator des Range Extenders zur Verfügung gestellte elektrische Leistung um so kleiner, je größer das Rekuperationsdrehmoment der Elektromaschine gesteuert und/oder geregelt wird und umgekehrt.

In einer Variante wird ab einem Beginn eines Verzögerungsvorganges das Rekuperationsdrehmoment erhöht.

Zweckmäßig wird während eines Anfangszeitraumes eines Verzögerungsvorganges von der Elektromaschine kein Rekuperationsdrehmoment zur Verfügung gestellt und/oder das Gesamtbremsdrehmoment wird aus der Summe des Rekuperationsdrehmomentes und eines Bremsdrehmomentes wenigstens einer Hybridfahrzeugbremse gebildet. Das Hybridfahrzeug wird durch ein Gesamtbremsdrehmoment abgebremst bzw. verzögert, wobei sich dieses aus dem Rekuperationsdrehmoment der Elektromaschine und dem Bremsdrehmoment wenigstens einer Hybridfahrzeugbremse zusammensetzt. Die Hybridfahrzeugbremse ist beispielsweise eine Scheiben- oder Trommelbremse an dem Hybridfahrzeug.

In einer weiteren Ausführungsform wird während eines Anfangszeitraumes des Verzögerungsvorganges von der Elektromaschine solange kein Rekuperationsdrehmoment zur Verfügung gestellt, bis die von dem Generator des Range Extenders zur Verfügung gestellte elektrische Leistung reduziert wird, z. B. um wenigstens 5%, 10% oder 20% reduziert wird. Während des Anfangszeitraumes des Verzögerungsvorganges befindet sich der Range Extender noch im Betrieb und um zu vermeiden, dass zusätzlich aufgrund eines Betriebes der Elektromaschine im Rekuperationsbetrieb elektrische Ladeleistung der Batterie zugeführt wird, wird während des Anfangszeitraumes des Gesamtbremsdrehmoment ausschließlich von der wenigstens einen Hybridfahrzeugbremse zur Verfügung gestellt. Erst wenn die elektrische Leistung der Verbrennungsmotor-Generator-Einheit reduziert worden ist, kann in gleichem Umfang entsprechend das Rekuperationsdrehmoment bzw. die von der Elektromaschine zur Verfügung gestellte elektrische Leistung entsprechend erhöht werden.

Insbesondere wird der von dem Generator der Verbrennungsmotor-Generator-Einheit und/oder der Elektromaschine erzeugte Wechselstrom von einem, vorzugsweise ungesteuerten, Gleichrichter in Gleichstrom zum Laden Batterie umgewandelt.

In einer weiteren Ausgestaltung wird der von dem Generator der Verbrennungsmotor-Generator-Einheit zur Verfügung gestellte elektrische Strom und/oder die von der Elektromaschine im Rekuperationsbetrieb zur Verfügung gestellte elektrische Strom zum Laden der Batterie dahingehend gesteuert und/oder geregelt, dass der elektrische Ladestrom der Batterie unterhalb eines vorgegebenen Stromgrenzwertes liegt.

In einer ergänzenden Variante werden von einer Vehicle Control Unit das Solldrehmoment, insbesondere das Rekuperationsdrehmoment und/oder das Antriebsdrehmoment, der Elektromaschine vorgegeben und/oder von einer Electronic Control Unit wird das Istdrehmoment, insbesondere das Rekuperationsdrehmoment und/oder das Antriebsdrehmoment, der Elektromaschine gesteuert und/oder geregelt und/oder von einer Range Extender Control Unit wird die von dem Generator der Verbrennungsmotor-Generator-Einheit zur Verfügung gestellte elektrische Leistung gesteuert und/oder geregelt.

Erfindungsgemäße Hybridantriebseinrichtung für ein Hybridfahrzeug, umfassend: einen Elektromaschine zum Antrieb und zur Verzögerung des Hybridfahrzeuges, eine Batterie, eine Verbrennungsmotor-Generator-Einheit als Range Extender zum Aufladen der Batterie und/oder zur Erzeugung von elektrischer Energie für die Elektromaschine als Motor, wobei ein in dieser Schutzrechtsanmeldung beschriebenes Verfahren ausführbar ist.

In einer weiteren Variante umfasst die Hybridantriebseinrichtung einen, vorzugsweise ungesteuerten, Gleichrichter zur Umwandlung des von dem Generator des Range Extenders und/oder der Elektromaschine erzeugten Wechselstromes in Gleichstrom zum Laden Batterie.

In einer weiteren Ausgestaltung umfasst die Hybridantriebseinrichtung eine Vehicle Control Unit, von der das Solldrehmoment der Elektromaschine vorgebbar ist und/oder die Hybridantriebseinrichtung umfasst eine Electronic Control Unit zur Steuerung und/oder Regelung des Istdrehmomentes der Elektromaschine und/oder die Hybridantriebseinrichtung eine Range Extender Control Unit umfasst zur Steuerung und/oder Regelung der von dem Generator der Verbrennungsmotor-Generator-Einheit zur Verfügung gestellten elektrischen Leistung.

Insbesondere sind die Vehicle Control Unit, die Electronic Control Unit und die Range Extender Control Unit zur einer Steuerungseinheit zusammengefasst.

In einer Variante ist der Generator eine, vorzugsweise permanentmagneterregte, Synchronelektromaschine.

### Kurze Beschreibung der Zeichnungen

Im Nachfolgenden wird ein Ausführungsbeispiel der Erfindung unter Bezugnahme auf die beigefügten Zeichnungen näher beschrieben. Es zeigt:
- Fig. 1: einen schematisiertes Systembild einer Verbrennungsmotor-Generator-Einheit als Range Extender,
- Fig. 2: ein schematisiertes Systembild einer Hybridantriebseinrichtung,
- Fig. 3: mehrere Diagramme und
- Fig. 4: eine Ansicht eines Hybridfahrzeuges.

### Ausführungsformen der Erfindung

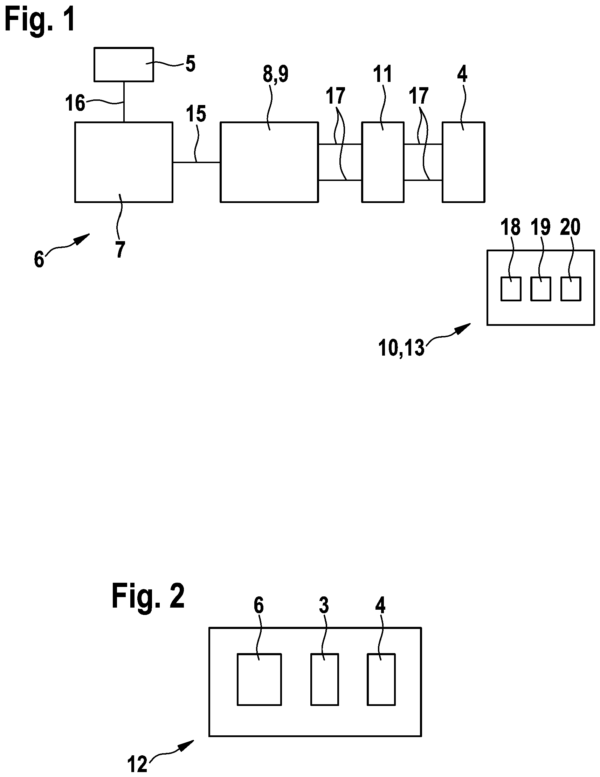

In Hybridfahrzeugen 1 als Kraftfahrzeuge 2, die von einer Elektromaschine 3 mittels elektrischer Energie aus einer Batterie 4 betrieben werden, werden zur Erweiterung der Reichweite des Hybridfahrzeuges 1 eine Verbrennungsmotor-Generator-Einheit 6 eingesetzt. Mittels der Verbrennungsmotor-Generator-Einheit 6 als sogenannter Range Extender wird mittels Kraftstoff aus einem Kraftstofftank 5, der durch eine Kraftstoffleitung 16 geleitet wird, mechanische Energie von einem Verbrennungsmotor 7 erzeugt, der von einem Generator 8 als permanentmagneterregte Synchronmaschine 9 in elektrische Energie umgewandelt wird. Der Verbrennungsmotor 7 ist mit dem Generator 8 mittels einer Antriebswelle 15 mechanisch verbunden (Fig. 1). Der Generator 8 erzeugt Wechselstrom, der von einem ungesteuerten Gleichrichter 11 in Gleichstrom umgewandelt wird. Die Verbrennungsmotor-Generator-Einheit 6 weist somit keine Pulswechselrichter auf, so dass die von der Verbrennungsmotor-Generator-Einheit 6 zur Verfügung gestellte elektrische Leistung P direkt proportional zur Drehzahl n des Verbrennungsmotors 7 bzw. der Drehzahl n des Generators 8 ist. Mittels der elektrischen Energie aus dem Generator 8 wird entweder die Batterie 4 aufgeladen und/oder die Elektromaschine 3 betrieben. Dadurch kann die Reichweite des Hybridfahrzeuges 1 wesentlich, z. B. auf Reichweiten im Bereich von ungefähr 300 km bis 600 km, erweitert werden. Die Reichweite des Hybridfahrzeuges 1 mittels elektrischer Energie aus der Batterie 4 liegt beispielsweise im Bereich von 50 km bis 150 km. Eine Hybridantriebseinrichtung 12 umfasst die Verbrennungsmotor-Generator-Einheit 6, die Elektromaschine 3 und eine Batterie 4.

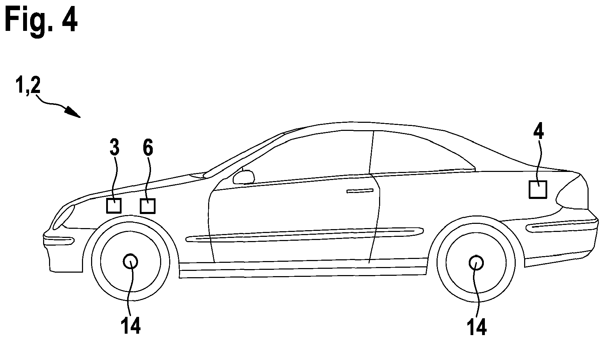

Der Generator 8 als Synchronmaschine 9, der ungesteuerte Gleichrichter 11 und die Batterie 4 sind dabei mittels Stromleitungen 17 miteinander verbunden. Zum Aufladen der Batterie 4 des Hybridfahrzeuges 1 (Fig. 4) ist es erforderlich, dass die von dem Gleichrichter 11 zur Verfügung gestellte Spannung des Gleichstromes größer ist als die Spannung der Batterie 4. Die Spannung der Batterie 4 hängt dabei von dem Lade- oder Belastungszustand der Batterie 4 ab. Eine Steuerungseinheit 13 erhält mittels nicht dargestellter Steuerungsleitungen einen Sollwert für die Spannung des Gleichstromes zum Aufladen der Batterie 4. Mittels dieses Sollwertes wird von der Steuerungseinheit 13 als Einrichtung 10 zur Steuerung der Spannung des Gleichstromes die Drehzahl n des Verbrennungsmotors 7 gesteuert und/oder geregelt.

Je höher die Drehzahl des Verbrennungsmotors 7 und damit auch des Generators 8, aufgrund der mechanischen Kopplung lediglich mittels der Antriebswelle 15, desto größer ist die Spannung des von dem Generator 8 zur Verfügung gestellten Wechselstromes. Je höher die Spannung des von dem Generator 8 zur Verfügung gestellten Wechselstromes ist, desto größer ist die Spannung des von dem Gleichrichter 11 zur Verfügung gestellten Gleichstromes und umgekehrt. Damit kann durch die Steuerung und/oder Regelung der Drehzahl des Verbrennungsmotors 7 und damit auch des Generators 8 die Spannung des von dem Gleichrichter 11 gleichgerichteten Stromes zum Aufladen der Batterie gesteuert und/oder geregelt werden.

In einem weiteren, nicht dargestellten Ausführungsbeispiel der Verbrennungsmotor-Generator-Einheit 6 ist der Verbrennungsmotor 7 mit dem Generator 8 mittels eines Getriebes verbunden. Mittels dieses Getriebes kann die Drehzahl des Generators 8 unabhängig von der Drehzahl des Verbrennungsmotors 7 gesteuert und/oder geregelt werden und damit auch die Spannung des von dem Gleichrichter 11 zur Verfügung gestellten Gleichstromes. Die Steuerungseinheit 13 steuert mittels des nicht dargestellten Getriebes die Drehzahl des Generators 8 und damit auch die Spannung des von dem Gleichrichter 11 zur Verfügung gestellten Gleichstromes.

In Fig. 4 ist das Hybridfahrzeug 1 dargstellt. Das Hybridfahrzeug 1 wird ausschließlich von der Elektromaschine 3 angetrieben. Die elektrische Energie zum Antrieb des Elektrofahrzeuges 1 stammt aus der Batterie 4 und/oder der Verbrennungsmotor-Generator-Einheit 6. Um die Reichweite des Elektrofahrzeuges 1 zu erhöhen, ist in das Hybridfahrzeug 1 die Verbrennungsmotor-Generator-Einheit 6 gemäß Fig. 1 eingebaut. Dadurch kann die Reichweite des Hybridfahrzeuges 2 auf Reichweiten im Bereich von ungefähr 300 bis 600 km erweitert werden. Mittels des von dem Generator 8 zur Verfügung gestellten elektrischen Stromes kann entweder die Batterie 4 aufgeladen werden und/oder die Elektromaschine 3 zum Antrieb oder zur Traktion des Hybridfahrzeuges 1 betrieben werden.

Die Elektromaschine 3 zum Antrieb des Hybridfahrzeuges 1 kann auch im Rekuperationsbetrieb als Generator zur Verzögerung bzw. zum Abbremsen des Hybridfahrzeuges 1 eingesetzt werden. Die Elektromaschine 3 wird somit sowohl als Elektromotor als auch als Generator betrieben. Im Rekuperationsbetrieb bringt die Elektromaschine 3 ein Rekuperationsdrehmoment als negatives Drehmoment auf das Hybridfahrzeug 1 auf, so dass dadurch das Hybridfahrzeug 1 abgebremst wird. Mittels dieses Rekuperationsdrehmomentes wird die Elektromaschine 3 angetrieben und erzeugt elektrischen Strom zum Aufladen der Batterie 4. Vorzugsweise ist dabei die Batterie 4 eine Hochvoltbatterie, beispielsweise mit einer Spannung von mehr als 50 oder 100 Volt. Während eines Stillstandes des Hybridfahrzeuges 1 kann dieses mittels eines nicht dargestellten externen oder internen Ladegerätes durch ein externes Stromnetz, z. B. ein 230 Volt Hausnetz, aufgeladen werden.

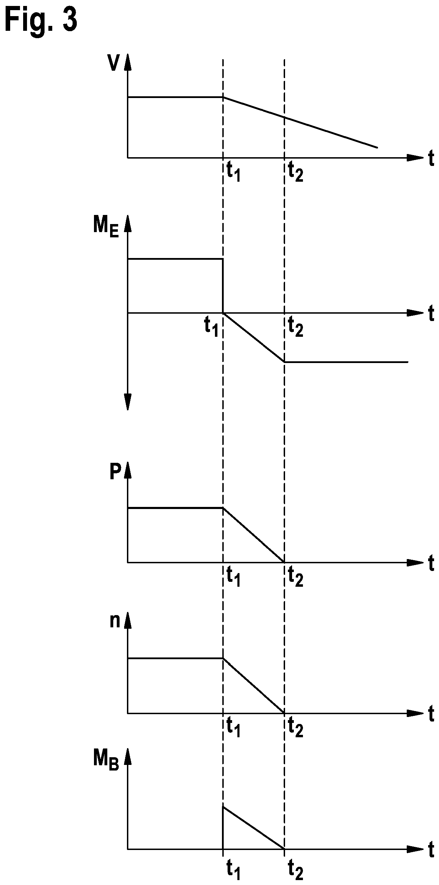

In Fig. 3 sind fünf Diagramme dargestellt. In sämtlichen Diagrammen ist auf der Abszisse die Zeit aufgetragen. In dem in Fig. 3 dargestellten obersten Diagramm ist auf der Ordinate die Geschwindigkeit v des Hybridfahrzeuges 1 dargestellt. Das Hybridfahrzeug 1 fährt zunächst mit einer konstanten Geschwindigkeit und ab einem Zeitpunkt t₁ wird die Geschwindigkeit des Hybridfahrzeuges 1 reduziert, es liegt somit ab dem Zeitpunkt t₁ ein Verzögerungs- oder Bremsvorgang des Hybridfahrzeuges 1 vor.

In dem in Fig. 3 von oben dargestellten zweiten Diagramm ist auf der Ordinate das Drehmoment M_{E} der Elektromaschine 3 dargestellt. Bis zum Zeitpunkt t₁ leistet die Elektromaschine 3 ein positives Drehmoment M_{E} als Antriebsdrehmoment zum Antrieb des Hybridfahrzeuges 1 und ab dem Zeitpunkt t₁ leistet die Elektromaschine 3 ein negatives Drehmoment, d. h. ein Rekuperationsdrehmoment zur Verzögerung des Hybridfahrzeuges 1. Die Elektromaschine 3 wird somit bis zum Zeitpunkt t₁ als Elektromotor betrieben und ab dem Zeitpunkt t₁ als Generator. Dabei steigt das Rekuperationsdrehmoment vom Zeitpunkt t₁ zum Zeitpunkt t₂ konstant an und ab dem Zeitpunkt t₂ stellt die Elektromaschine 3 ein konstantes Rekuperationsdrehmoment M_{E} zur Verfügung. In dem in Fig. 3 dargestellten dritten Diagramm ist die elektrische Leistung P der Verbrennungsmotor-Generator-Einheit 6 dargestellt. Bis zum Zeitpunkt t₁, d. h. während der Fahrt des Hybridfahrzeuges 1 mittels mechanischer Energie aus der Elektromaschine 3 als Elektromotor, wird von der Verbrennungsmotor-Generator-Einheit 6 die elektrische Leistung P zur Verfügung gestellt, um einerseits die Elektromaschine 3 mit elektrischer Energie zu versorgen und andererseits die Batterie 4 aufzuladen. Im vierten Diagramm in Fig. 3 ist die Drehzahl n des Verbrennungsmotors 7 der Verbrennungsmotor-Generator-Einheit 6 dargestellt. Dabei ist die von der Verbrennungsmotor-Generator-Einheit 6 zur Verfügung gestellte elektrische Energie direkt proportional zur Drehzahl des Verbrennungsmotors 7 bzw. des Generators 8 der Verbrennungsmotor-Generator-Einheit 6, weil ein ungesteuerter Gleichrichter 11 zum Umwandlung des von dem Generator 8 erzeugten Wechselstromes im Gleichstrom eingesetzt wird. Das Hybridfahrzeug 1 weist an den vier Rädern jeweils Hybridfahrzeugbremsen 14 als Scheibenbremsen auf. Ab dem Zeitpunkt t₁ wird von dem Fahrer des Hybridfahrzeuges 1 ein Bremsvorgang eingeleitet, indem dieser ein nicht dargestelltes Bremspedal betätigt. Der Fahrer gibt somit ein Gesamtbremsdrehmoment vor, mit welchem das Hybridfahrzeug 1 zu verzögern ist. Mit dem Betätigen des Bremspedales zum Zeitpunkt t₁ kann jedoch die von der Verbrennungsmotor-Generator-Einheit 6 zur Verfügung gestellte elektrische Leistung nicht in einer sehr kurzen Zeit, z. B. weniger als eine Sekunde oder einige Millisekunden, auf Null reduziert werden, damit die elektrische Ladeleistung der Batterie 4, welche sich aus der Summe der von der Verbrennungsmotor-Generator-Einheit 6 und der Elektromaschine 3 zur Verfügung gestellten elektrischen Leistung zum Aufladen der Batterie 4 zusammensetzt, nicht einen vorgegebenen Grenzwert überschreitet. Aus diesem Grund wird zum Zeitpunkt t₁ das Gesamtbremsdrehmoment ausschließlich von den Hybridfahrzeugbremsen 14, die das Bremsmoment M_{B} erbringen, zur Verfügung gestellt und die Elektromaschine 3 leistet kein Rekuperationsdrehmoment. Vom Zeitpunkt t₁ bis zum Zeitpunkt t₂ wird das Bremsdrehmoment M_{B} der Hybridfahrzeugbremsen 14 linear reduziert und gleichzeitig im gleichen Umfang das Rekuperationsdrehmoment der Elektromaschine 3 erhöht. Zusätzlich wird vom Zeitpunkt t₁ bis zum Zeitpunkt t₂ die von der Verbrennungsmotor-Generator-Einheit 6 zur Verfügung gestellte elektrische Leistung auf Null reduziert. Dadurch bleibt auch während des Verzögerungsvorganges zwischen den Zeitpunkten t₁ und t₂ die gesamte elektrische Ladeleistung der Batterie 4 unterhalb eines vorgegebenen Grenzwertes, welcher in diesem Ausführungsbeispiel der elektrischen Leistung der Verbrennungsmotor-Generator-Einheit 6 bis zum Zeitpunkt t₁ entspricht. Ab dem Zeitpunkt t₂ wird von der Verbrennungsmotor-Generator-Einheit 6 keine elektrische Leistung zur Verfügung gestellt, d. h. diese ist abgeschaltet und die Verzögerung des Hybridfahrzeuges 1 wird ausschließlich mittels des von der Elektromaschine 3 zur Verfügung gestellten Rekuperationsdrehmomentes ausgeführt.

Die in Fig. 3 dargestellten Abläufe können dabei vielfältig verändert bzw. variiert werden. Beispielsweise kann ab dem Zeitpunkt t₂ das Gesamtbremsdrehmoment nicht nur ausschließlich von der Elektromaschine 3 sondern zusätzlich neben der Elektromaschine 3 auch von den Hybridfahrzeugbremsen 14 zur Verfügung gestellt werden, sofern beispielsweise der Fahrer des Hybridfahrzeuges 1 eine stärkere Verzögerung des Hybridfahrzeuges 1 wünscht. Ist der vorgegebene Grenzwert der elektrischen Ladeleistung der Batterie 4 größer als die elektrische Leistung der Verbrennungsmotor-Generator-Einheit 6 bis zum Zeitpunkt t₁ gemäß dem dritten Diagramm in Fig. 3, kann bereits zum Zeitpunkt t₁ die Elektromaschine 3 ein (kleines) Rekuperationsdrehmoment zur Verfügung stellen und damit auch elektrische Leistung zum Aufladen der Batterie 4, ohne dass der vorgegebene Grenzwert der elektrischen Ladeleistung der Batterie 4 überschritten wird. Wird während des Verzögerungsvorganges von dem Fahrer des Hybridfahrzeuges 1 nur ein sehr kleines Gesamtbremsdrehmoment angefordert, kann auch noch nach dem Zeitpunkt t₂ die Verbrennungsmotor-Generator-Einheit 6 mit einer geringeren elektrischen Leistung betrieben werden, so dass nach dem Zeitpunkt t₂ die Batterie 4 sowohl von dem von der Elektromaschine 3 zur Verfügung gestellten elektrischen Leistung als auch von der Verbrennungsmotor-Generator-Einheit 6 aufgeladen werden. Unterschiedlich große von dem Fahrer des Hybridfahrzeuges angeforderte Bremsdrehmoment während eines Verzögerungsvorganges führen somit zu einer Variation der Vorgänge bzw. Betriebsweisen der Komponenten der Hybridantriebseinrichtung 12.

Eine Vehicle Control Unit 18 gibt ein erforderliches Solldrehmoment der Elektromaschine 3 vor. Eine Electronic Control Unit 19 steuert und/oder regelt die Elektromaschine 3, so dass das Istdrehmoment des Elektromotors 3 dem von der Vehicle Control Unit 18 vorgegebenen Solldrehmoment entspricht. Von einer Range Extender Control Unit 20 wird die von dem Generator 8 der Verbrennungsmotor-Generator-Einheit 6 zur Verfügung gestellte elektrische Leistung gesteuert und/oder geregelt. Dabei sind die Vehicle Control Unit 18, die Electronic Control Unit 19 und die Range Extender Control Unit 20 in der Steuerungseinheit 13 zusammengefasst.

Insgesamt betrachtet sind mit der erfindungsgemäßen Hybridantriebseinrichtung 12 wesentliche Vorteile verbunden. Während, insbesondere zu Beginn eines Verzögerungsvorganges, wird die Elektromaschine 3 nicht oder nur in einem geringen Umfang im Rekuperationsbetrieb betrieben, so dass die der Batterie 4 zur Verfügung gestellte elektrische Ladeleistung unterhalb eines vorgegebenen Grenzwertes liegt, weil die von der Verbrennungsmotor-Generator-Einheit 6 während des Verzögerungsvorganges, insbesondere während des Beginnes des Verzögerungsvorganges, zur Verfügung gestellte elektrische Leistung nicht innerhalb sehr kurzer Zeit auf Null oder einen geringeren Wert reduziert werden kann. Dadurch kann die der Batterie 4 zur Verfügung gestellte maximale elektrische Ladeleistung klein und Schäden an der Batterie 4 können vermieden werden.

## Patentansprüche

1. Verfahren zum Betreiben einer Hybridantriebseinrichtung (12), die Hybridanriebseinrichtung (12) umfassend eine Verbrennungsmotor-Generator-Einheit (6) als Range Extender, wenigstens eine Elektromaschine (3) zum Antrieb und zur Verzögerung des Hybridfahrzeuges (1) und eine Batterie (4) mit den Schritten:
- Erzeugen von mechanischer Energie in einem Verbrennungsmotor (7) der Verbrennungsmotor-Generator-Einheit (6),
- Umwandeln der mechanischen Energie in elektrische Energie in einem Generator (8) der Verbrennungsmotor-Generator-Einheit (6),
- Laden der Batterie (4) mit elektrischer Energie aus dem Generator (8) und/oder
- Laden der Batterie (4) mit elektrischer Energie aus der Elektromaschine (3) im Rekuperationsbetrieb,
wobei während des Betriebes der wenigstens einen Elektromaschine (3) zur Verzögerung des Hybridfahrzeuges (1) und einem Laden der Batterie (4) mit elektrischer Energie aus der wenigstens einen Elektromaschine (3) im Rekuperationsbetrieb die von dem Generator (8) der Verbrennungsmotor-Generator-Einheit (6) zur Verfügung gestellte elektrische Leistung und/oder die von der wenigstens einen Elektromaschine (3) im Rekuperationsbetrieb zur Verfügung gestellte elektrische Leistung zum Laden der Batterie (4) dahingehend gesteuert und/oder geregelt wird, dass die elektrische Ladeleistung der Batterie (4) unterhalb eines vorgegebenen Grenzwertes liegt,
**dadurch gekennzeichnet, dass**
die von dem Generator (8) der Verbrennungsmotor-Generator-Einheit (6) zur Verfügung gestellte elektrische Leistung indirekt proportional zu dem Rekuperationsdrehmoment der Elektromaschine (3) gesteuert und/oder geregelt wird und/oder
das Rekuperationsdrehmoment der Elektromaschine (3) indirekt proportional zu dem von dem Generator (8) der Verbrennungsmotor-Generator-Einheit (6) zur Verfügung gestellte elektrische Leistung gesteuert und/oder geregelt wird.

2. Verfahren nach Anspruch 1, **dadurch gekennzeichnet, dass** die von dem Generator (8) der Verbrennungsmotor-Generator-Einheit (6) zur Verfügung gestellte elektrische Leistung gesteuert und/oder geregelt wird mit der Drehzahl des Verbrennungsmotors (7) und/oder der Drehzahl des Generators (8) der Verbrennungsmotor-Generator-Einheit (6)
und/oder
der vorgegebene Grenzwert der elektrischen Ladeleistung der Batterie (4) zwischen dem 0,9 oder 2,5-Fachen, insbesondere zwischen dem 0,9 oder 1,5-Fachen der maximalen elektrischen Leistung der Verbrennungsmotor-Generator-Einheit (6) liegt.

3. Verfahren nach Anspruch 1 oder 2, **dadurch gekennzeichnet, dass** die elektrische Ladeleistung der Batterie (4) aus der Summe der von dem Generator (8) der Verbrennungsmotor-Generator-Einheit (6) und der Elektromaschine (3) zur Verfügung gestellten elektrischen Leistung gebildet wird.

4. Verfahren nach einem oder mehreren der vorhergehenden Ansprüche,
**dadurch gekennzeichnet, dass**
die von dem Generator (8) der Verbrennungsmotor-Generator-Einheit (6) zur Verfügung gestellte elektrische Leistung in Abhängigkeit von dem Rekuperationsdrehmoment der Elektromaschine (3) gesteuert und/oder geregelt wird und/oder umgekehrt.

5. Verfahren nach einem oder mehreren der vorhergehenden Ansprüche,
**dadurch gekennzeichnet, dass**
ab einem Beginn eines Verzögerungsvorganges das Rekuperationsdrehmoment erhöht wird.

6. Verfahren nach einem oder mehreren der vorhergehenden Ansprüche, **dadurch gekennzeichnet, dass**
während eines Anfangszeitraumes eines Verzögerungsvorganges von der Elektromaschine (3) kein Rekuperationsmoment zur Verfügung gestellt wird und/oder das Gesamtbremsdrehmoment aus der Summe des Rekuperationsdrehmomentes und eines Bremsdrehmomentes wenigstens einer Hybridfahrzeugbremse (14) gebildet wird.

7. Verfahren nach einem oder mehreren der vorhergehenden Ansprüche,
**dadurch gekennzeichnet, dass**
während eines Anfangszeitraumes des Verzögerungsvorganges von der Elektromaschine (3) solange kein Rekuperationsdrehmoment zur Verfügung gestellt wird, bis die von dem Generator (8) des Range Extenders zur Verfügung gestellte elektrische Leistung reduziert wird.

8. Verfahren nach einem oder mehreren der vorhergehenden Ansprüche,
**dadurch gekennzeichnet, dass**
der von dem Generator (8) der Verbrennungsmotor-Generator-Einheit (6) und/oder der Elektromaschine (3) erzeugte Wechselstrom von einem, vorzugsweise ungesteuerten, Gleichrichter (11) in Gleichstrom zum Laden Batterie (4) umgewandelt wird.

9. Verfahren nach einem oder mehreren der vorhergehenden Ansprüche,
**dadurch gekennzeichnet, dass**
der von dem Generator (8) der Verbrennungsmotor-Generator-Einheit (6) zur Verfügung gestellte elektrische Strom und/oder die von der Elektromaschine (3) im Rekuperationsbetrieb zur Verfügung gestellte elektrische Strom zum Laden der Batterie (4) dahingehend gesteuert und/oder geregelt wird, dass der elektrische Ladestrom der Batterie (4) unterhalb eines vorgegebenen Stromgrenzwertes liegt.

10. Verfahren nach einem oder mehreren der vorhergehenden Ansprüche,
**dadurch gekennzeichnet, dass**
von einer Vehicle Control Unit (18) das Solldrehmoment, insbesondere das Rekuperationsdrehmoment und/oder das Antriebsdrehmoment, der Elektromaschine (3) vorgegeben werden
und/oder
von einer Electronic Control Unit (19) das Istdrehmoment, insbesondere das Rekuperationsdrehmoment und/oder das Antriebsdrehmoment, der Elektromaschine (3) gesteuert und/oder geregelt wird
und/oder
von einer Range Extender Control Unit (20) die von dem Generator (8) der Verbrennungsmotor-Generator-Einheit (6) zur Verfügung gestellte elektrische Leistung gesteuert und/oder geregelt wird.

## Claims

1. Method for operating a hybrid drive device (12), the hybrid drive device (12) comprising an internal combustion engine-generator unit (6) as a range extender, at least one electric machine (3) for driving and for decelerating the hybrid vehicle (1) and a battery (4) comprising the steps:
- generating mechanical energy in an internal combustion engine (7) of the internal combustion engine-generator unit (6),
- converting the mechanical energy into electrical energy in a generator (8) of the internal combustion engine-generator unit (3),
- charging the battery (4) with electrical energy from the generator (8) and/or
- charging the battery (4) with electrical energy from the electric machine (3) in the recuperation mode,
wherein during the operation of the at least one electric machine (3) for decelerating the hybrid vehicle (1) and charging the battery (4) with electrical energy from the at least one electric machine (3) in the recuperation mode, the electrical power which is made available by the generator (8) of the internal combustion engine-generator unit (6) and/or the electrical power which is made available by the at least one electric machine (3) in the recuperation mode are/is open-loop and/or closed-loop controlled in order to charge the battery (4) in such a way that the electrical charging power of the battery (4) is below a predefined limiting value
**characterized in that**
the electrical power which is made available by the generator (8) of the internal combustion engine-generator unit (6) is open-loop and/or closed-loop controlled in indirect proportion to the recuperation torque of the electric machine (3),
and/or
the recuperation torque of the electric machine (3) is open-loop and/or closed-loop controlled in indirect proportion to the electrical power made available by the generator (8) of the internal combustion engine-generator unit (6).

2. Method according to Claim 1, **characterized in that** the electrical power which is made available by the generator (8) of the internal combustion engine-generator unit (6) is open-loop and/or closed-loop controlled with the rotational speed of the internal combustion engine (7) and/or the rotational speed of the generator (8) of the internal combustion engine-generator unit (6)
and/or
the predefined limiting value of the electrical charging power of the battery (4) is between 0.9 or 2.5 times, in particular between 0.9 or 1.5 times, the maximum electrical power of the internal combustion engine-generator unit (6).

3. Method according to Claim 1 or 2, **characterized in that** the electrical charging power of the battery (4) is formed from the sum of the electrical power made available by the generator (8) of the internal combustion engine-generator unit (6) and that made available by the electric machine (3).

4. Method according to one or more of the preceding claims,
**characterized**
**in that** the electrical power made available by the generator (8) of the internal combustion engine-generator unit (6) is open-loop and/or closed-loop controlled as a function of the recuperation torque of the electric machine (3), and/or vice versa.

5. Method according to one or more of the preceding claims,
**characterized in that**
the recuperation torque is increased from a start of a deceleration process.

6. Method according to one or more of the preceding claims,
**characterized in that**
during an initial time period of a deceleration process, the electric machine (3) does not make available any recuperation torque and/or the total braking torque is formed from the sum of the recuperation torque and a braking torque of at least one hybrid vehicle brake (14).

7. Method according to one or more of the preceding claims,
**characterized in that**
during an initial time period of the deceleration process the electric machine (3) makes available no recuperation torque until the electrical power which is made available by the generator (8) of the range extender is reduced.

8. Method according to one or more of the preceding claims,
**characterized in that**
the alternating current which is generated by the generator (8) of the internal combustion engine-generator unit (6) and/or of the electric machine (3) is converted by a, preferably non-controlled, rectifier (11) into direct current for charging the battery (4).

9. Method according to one or more of the preceding claims,
**characterized in that**
the electrical current which is made available by the generator (8) of the internal combustion engine-generator unit (6) and/or the electrical current which is made available by the electric machine (3) in the recuperation mode is open-loop and/or closed-loop controlled in order to charge the battery (4) to the effect that the electrical charging current of the battery (4) is below a predefined current limiting value.

10. Method according to one or more of the preceding claims,
**characterized in that**
a vehicle control unit (18) predefines the setpoint torque, in particular the recuperation torque and/or the drive torque, of the electric machine (3),
and/or
an electronic control unit (19) open-loop and/or closed-loop controls the actual torque, in particular the recuperation torque and/or the drive torque, of the electric machine (3),
and/or
a range extender control unit (20) open-loop and/or closed-loop controls the electrical power made available by the generator (8) of the internal combustion engine-generator unit (6).

## Revendications

1. Procédé pour faire fonctionner un dispositif de propulsion hybride (12), le dispositif de propulsion hybride (12) comprenant un ensemble moteur à combustion interne .et générateur (6) faisant office de prolongateur d'autonomie, au moins une machine électrique (3) destinée à la propulsion et au ralentissement du véhicule hybride (1) et une batterie (4), comprenant les étapes suivantes :
- génération d'énergie mécanique dans un moteur à combustion interne (7) de l'ensemble moteur à combustion interne et générateur (6),
- conversion de l'énergie mécanique en énergie électrique dans un générateur (8) de l'ensemble moteur à combustion interne et générateur (6),
- charge de la batterie (4) avec de l'énergie électrique provenant du générateur (8) et/ou
- charge de la batterie (4) avec de l'énergie électrique provenant de la machine électrique (3) en mode récupération,
procédé selon lequel, pendant le fonctionnement de l'au moins une machine électrique (3) pour le ralentissement du véhicule hybride (1) et une charge de la batterie (4) avec de l'énergie électrique provenant de l'au moins une machine électrique (3) en mode récupération, la puissance électrique mise à disposition par le générateur (8) de l'ensemble moteur à combustion interne et générateur (6) et/ou la puissance électrique mise à disposition par l'au moins une machine électrique (3) en mode récupération est commandée et/ou régulée en vue de charger la batterie (4) de telle sorte que la puissance de charge électrique de la batterie (4) est inférieure à une valeur de seuil prédéfinie,
**caractérisé en ce que**
la puissance électrique mise à disposition par le générateur (8) de l'ensemble moteur à combustion interne et générateur (6) est commandée et/ou régulée de manière indirectement proportionnelle au couple de récupération de la machine électrique (3) et/ou le couple de récupération de la machine électrique (3) est commandé et/ou régulé de manière indirectement proportionnelle à la puissance électrique mise à disposition par le générateur (8) de l'ensemble moteur à combustion interne et générateur (6).

2. Procédé selon la revendication 1, **caractérisé en ce que** la puissance électrique mise à disposition par le générateur (8) de l'ensemble moteur à combustion interne et générateur (6) est commandée et/ou régulée avec la vitesse de rotation du moteur à combustion interne (7) et/ou la vitesse de rotation du générateur (8) de l'ensemble moteur à combustion interne et générateur (6)
et/ou
la valeur limite prédéfinie de la puissance de charge électrique de la batterie (4) est comprise entre 0,9 et 2,5 fois, notamment entre 0,9 et 1,5 fois la puissance électrique maximale de l'ensemble moteur à combustion interne et générateur (6).

3. Procédé selon la revendication 1 ou 2, **caractérisé en ce que** la puissance de charge électrique de la batterie (4) est formée par la somme de la puissance électrique mise à disposition par le générateur (8) de l'ensemble moteur à combustion interne et générateur (6) et la machine électrique (3).

4. Procédé selon une ou plusieurs des revendications précédentes, **caractérisé en ce que** la puissance électrique mise à disposition par le générateur (8) de l'ensemble moteur à combustion interne et générateur (6) est commandée et/ou régulée en fonction du couple de récupération de la machine électrique (3) et/ou inversement.

5. Procédé selon une ou plusieurs des revendications précédentes, **caractérisé en ce que** le couple de récupération est augmenté à partir d'un début d'une opération de ralentissement.

6. Procédé selon une ou plusieurs des revendications précédentes, **caractérisé en ce que** pendant une période initiale d'une opération de ralentissement, aucun couple de récupération n'est mis à disposition par la machine électrique (3) et/ou le couple de freinage total est formé par la somme du couple de récupération et d'un couple de freinage d'au moins un frein de véhicule hybride (14).

7. Procédé selon une ou plusieurs des revendications précédentes, **caractérisé en ce que** pendant une période initiale de l'opération de ralentissement, aucun couple de récupération n'est mis à disposition par la machine électrique (3) jusqu'à ce que la puissance électrique mise à disposition par le générateur (8) du prolongateur d'autonomie soit réduite.

8. Procédé selon une ou plusieurs des revendications précédentes, **caractérisé en ce que** le courant alternatif généré par le générateur (8) de l'ensemble moteur à combustion interne et générateur (6) et/ou la machine électrique (3) est converti par un redresseur (11), de préférence non commandé, en courant continu pour charger la batterie (4).

9. Procédé selon une ou plusieurs des revendications précédentes, **caractérisé en ce que** le courant électrique mis à disposition par le générateur (8) de l'ensemble moteur à combustion interne et générateur (6) et/ou le courant électrique mis à disposition par la machine électrique (3) en mode récupération est commandé et/ou régulé en vue de charger la batterie (4) de telle sorte que le courant de charge de la batterie (4) se trouve au-dessous d'une valeur de seuil de courant prédéfinie.

10. Procédé selon une ou plusieurs des revendications précédentes, **caractérisé en ce que** le couple de consigne, notamment le couple de récupération et/ou le couple d'entraînement, de la machine électrique (3) sont prédéfinis par une unité de commande de véhicule (18),
et/ou
le couple réel, notamment le couple de récupération et/ou le couple d'entraînement, de la machine électrique (3) est commandé et/ou régulé par une unité de commande électronique (19)
et/ou
l'énergie électrique mise à disposition par le générateur (8) de l'ensemble moteur à combustion interne et générateur (6) est commandée et/ou régulée par une unité de commande de prolongateur d'autonomie (20).
